# EUROPÄISCHE PATENTSCHRIFT

(11) **EP 0 770 904 B1**
(45) Veröffentlichungstag und Bekanntmachung des Hinweises auf die Patenterteilung: **04.06.2003**
(21) Anmeldenummer: 96115439.0
(22) Anmeldetag: 26.09.1996
(51) Int. Cl.: G03B 27/73, G03B 27/46, H04N 1/195

(54) **Verfahren und Vorrichtung zum Erfassen von Bildsignalen**
Method and device for image signal acquisition
Procédé et dispositif de saisie de signaux d'image

(30) Priorität: 25.10.1995 DE 19539690
(43) Veröffentlichungstag der Anmeldung: 02.05.1997
(73) Patentinhaber: Agfa-Gevaert AG, 51373 Leverkusen (DE)
(72) Erfinder: Münch, Reimund, Dr., 81543 München (DE); Benker, Gerhard, 82057 Icking (DE); Kiermeier, Arnfried, 85221 Dachau (DE); Lorenz, Bernhard, 85417 Marzling (DE); Gross, Ekkehard, 81675 München (DE)

(56) Entgegenhaltungen:
- US-A- 5 270 839
- US-A- 5 303 000
- PATENT ABSTRACTS OF JAPAN vol. 016, no. 435 (E-1263), 10.September 1992 & JP 04 151991 A (MITSUBISHI ELECTRIC CORP), 25.Mai 1992,
- PATENT ABSTRACTS OF JAPAN vol. 017, no. 587 (E-1453), 26.Oktober 1993 & JP 05 176115 A (TOKYO ELECTRIC POWER CO INC:THE;OTHERS: 03), 13.Juli 1993, & JP 05 176 115 A
- PATENT ABSTRACTS OF JAPAN vol. 015, no. 284 (E-1091), 18.Juli 1991 & JP 03 097388 A (BROTHER IND LTD), 23.April 1991, & JP 03 097 388 A

## Beschreibung

Die Erfindung betrifft ein Verfahren nach dem Oberbegriff des Anspruchs 1 und eine Vorrichtung zur Durchführung des Verfahrens nach dem Oberbegriff des Anspruchs 5.

Im Bereich der Kopiertechnik tritt verschiedentlich die Notwendigkeit auf, zusätzlich zu der als optische Abbildung der Vorlage auf ein Kopiermaterial hergestellten Kopie den Bildinhalt punktweise mit hoher Auflösung für eine Bildwiedergabe in anderem Zusammenhang zu erfassen. Hierfür ist z. B. aus der Deutschen Patentschrift 42 30 449 eine Vorrichtung zur Herstellung sogenannter Package Prints bekannt, bei der über einen Umlenkspiegel die farbrichtig beleuchtete Kopiervorlage in eine Farbfemsehkamera hinein abgebildet wird, um damit sogenannte Klassenfotos zu belichten. Solche Farbfemsehkameras sind von der Videotechnik her bekannt. Sie sind entweder als Einchip-Kameras mit entsprechender pixelweiser Farbfilterung zur Erfassung der drei Farbauszüge ausgestattet oder das Bild wird unter Zwischenschaltung von entsprechenden Farbfiltern optisch aufgeteilt auf drei verschiedene Sensorchips, deren Bilder dann wieder zusammengefügt werden. Die letztere Bauform ist naturgemäß sehr aufwendig. Auch die erstere Bauform ist gerade für hohe Auflösungen, d. h. hohe Pixelzahlen sehr aufwendig und die Farbfilter sind abgestimmt auf die visuelle Sensibilisierung, d. h. auf die Empfindlichkeit des Auges. Diese weicht jedoch von der spektralen Empfindlichkeit der üblichen Kopiermaterialien erheblich ab. Wenn also diese Bildsignale nicht nur z. B. auf einem Bildschirm zur Betrachtung wiedergegeben, sondem auf fotografisches Kopiermaterial aufbelichtet werden sollen, sind sehr aufwendige Farbkorrekturen erforderlich. Diese üblichen Farbvideokameras werden also für die Bilderfassung in fotografischen Geräten nur deshalb eingesetzt, weil sie aufgrund der weiten Verbreitung für Videozwecke vergleichsweise preiswert erhältlich sind und durch die gleichzeitige Aufnahme der drei Farbbilder eine schnelle Erfassung von Farbvorlagen möglich ist.

In jüngerer Zeit wird die Bildsignalerfassung vor allem gewünscht für die Herstellung sogenannter Indexprints, d. h. für die stark verkleinerte Wiedergabe aller Bilder eines Films auf einem einzigen Blatt, um für Archivzwecke dem Fotofreund alle Bilder seines Films zusammen mit der Negativnummer im Film, z. B. für Nachbestellungen, wiederzugeben.

Wenn solche Indexprints auch von Filmen erstellt werden sollen, die auf sogenannten Minilabs bearbeitet werden, sind die bei Hochleistungsgeräten üblichen Farbvideokameras immer noch zu teuer. Andererseits spielt die Geschwindigkeit der Bilderfassung keine so große Rolle.

Aufgabe der Erfindung ist es, Verfahren und Vorrichtungen der eingangs genannten Art zur Bilderfassung zu schaffen, die von ihren Gestehungskosten her auch für Minilabs vertretbar sind.

Diese Aufgabe wird gelöst durch ein Verfahren mit den kennzeichnenden Merkmalen des Anspruchs 1. Die Erfindung geht aus von der Erkenntnis, daß Schwarzweiß-Bildsensoren, die ja keine komplizierte pixelweise Farbfilterung oder drei Sensoren für je eine Farbe benötigen, preiswert zur Verfügung stehen und daß die ohnedies vorhandenen Kopierfilter von vorne herein besser an die spektrale Empfindlichkeit des Kopiermaterials angepaßt sind als die auf die visuelle Sensibilisierung abgestimmten Farbfilter in Einröhrenkameras.

Nach einer Ausgestaltung der Erfindung ist diese auch anwendbar bei dem für einfachere Farbkopiergeräte besonders zweckmäßigen Kopierverfahren mit Weißlicht und subtraktiven Nachbelichtungen. Hier werden sogenannte subtraktive Filter in den Farben Cyan, Magenta und Gelb als sogenannte Farbverschlüsse in den Kopierlichtstrahlengang eingefahren, wenn bei der mit weißem Licht beginnenden Kopierbelichtung die geforderte Kopierlichtmenge in den Farben Rot, Grün oder Blau auf das Kopiermaterial aufgetroffen ist Nachdem aber für die Bildsignalerfassung jeweils ein Farbauszug in den Grundfarben Rot, Grün und Blau benötigt wird, werden nacheinander jeweils zwei der drei subtraktiven Filter gleichzeitig in den Beleuchtungsstrahlengang der Vorlage gebracht und somit Farbauszüge in den Grundfarben Rot, Grün und Blau erzeugt.

Nach einer weiteren Ausgestaltung der Erfindung ist bei einer Vorrichtung zur Durchführung des Verfahrens als Bildsensor eine ungefilterte Flächen-CCD vorgesehen.

Weitere Einzelheiten und Vorteile der Erfindung ergeben sich aus den Unteransprüchen im Zusammenhang mit der Beschreibung eines Ausführungsbeispieles, das anhand von schematischen Zeichnungen beschrieben ist.
Es zeigen:
- Fig. 1: ein erfindungsgemäß gestaltetes Farbkopiergerät mit einer Einrichtung zur Bildsignalerfassung in einer schematisierten Frontansicht,
- Fig. 2: ausschnittsweise eine abgewandelte Ausführungsform mit Spiegel zur Abtaststrahlumlenkung.

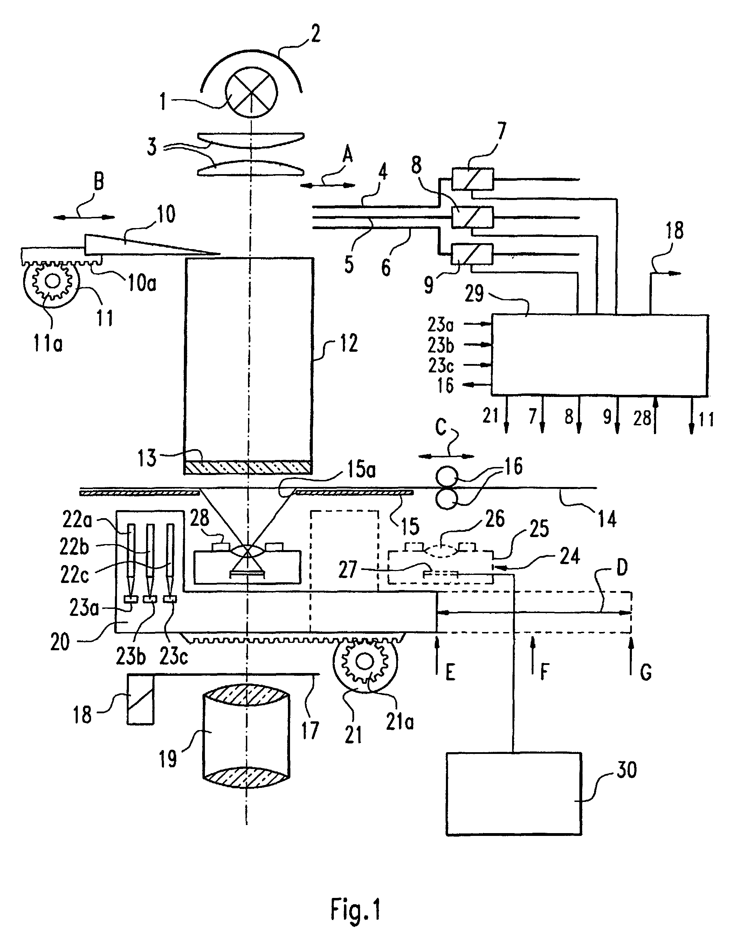

In Figur 1 ist mit 1 eine Kopierlichtquelle bezeichnet, insbesondere eine Halogenlampe, die im wesentlichen weißes Licht erzeugt. Deren Licht wird durch einen Reflektor 2 und einen Doppelkondensor 3 in einen Spiegelschacht 12 geworfen, dessen Seitenwände spiegelnd reflektieren. An der Austrittsseite des Spiegelschachtes 12 ist eine Streuscheibe 13 angeordnet, die ein darunterliegendes Kopierfenster 15a in einer Filmführung 15 gleichmäßig ausleuchtet. Bereits die Verspiegelung des Spiegelschachtes 12 führt dazu, daß auch bei gewissen Ungleichmäßigkeiten in der Helligkeitsverteilung an der Eintrittsöffnung des Spiegelschachtes 12 die Streuscheibe 13 im wesentlichen gleichförmig ausgeleuchtet ist.

Zwischen dem Kondensor 3 und dem Spiegelschacht 12 sind, betätigt durch entsprechende Steuermagnete 7, 8 und 9 in den Strahlengang einführbar Farbfilter 4, 5 und 6. Je nach Art des angewendeten Kopierverfahrens sind dies sogenannte additive Filter in den Farben Rot, Grün und Blau oder sogenannte subtraktive Filter in den Farben Cyan, Magenta und Gelb. Bei einem Kopierverfahren mit additiven Filtern kann entweder durch wechselweises Einführen je eines der Filter der Farbkopiervorgang so ablaufen, daß zunächst nur rotes Licht auf die Kopiervorlage fällt, dann im erforderlichen Umfang grünes Licht und zum Schluß blaues Licht. Dies kann auch in einer beliebigen anderen Reihenfolge ablaufen. Es kann aber auch zunächst mit weißem Licht, d. h. in allen drei Farben gleichzeitig mit dem Kopieren begonnen werden und sobald in einer der drei Farben genügend Licht auf die Vorlage aufgetroffen ist, wird zunächst das eine Filter der noch nicht vollständig belichteten Farbe eingeschoben, dann das andere.

Bei den sogenannten subtraktiven Filtern in den Farben Cyan, Magenta und Gelb ist das übliche Kopierverfahren so, daß zunächst mit weißem Licht begonnen wird, dann nach dem Erreichen der erforderlichen Kopierlichtmenge in einer der drei Farben das zugehörige Sperrfilter als sogenannter Farbverschluß in den Strahlengang eingeschoben wird, dann nach Erreichen der gewünschten Kopierlichtmenge in der zweiten Farbe das zugehörige zweite Sperrfilter und schließlich bei Vervollständigung der längsten Teilbelichtung der Verschluß 17 durch Betätigen des Magneten 18. Wie die jeweils anzuwendenden Kopierlichtmengen in den Farben für jede Vorlage ermittelt werden, wird im Zusammenhang mit der Scaneinrichtung erläutert.

Schließlich befindet sich zwischen der Bewegungsebene der Farbfilter 4, 5, 6 und dem Eintritt des Spiegelschachtes 12 eine Intensitätssteuereinrichtung. Die gezeigte besteht aus einem verschiebbaren Graukeil 10 mit einer Antriebseinrichtung, enthaltend eine Zahnstange 10a, einen Motor 11 und einen mit dem Motor 11 verbundenen, in die Zahnstange 10a eingreifenden Ritzel 11a. Entsprechend dem Pfeil B kann dieser Graukeil 10 durch den Motor 11 mehr oder weniger weit in den Strahlengang eingeschoben werden. Durch die Natur des Spiegelschachtes 12 wird dabei die ungleiche Intensitätsverteilung von dem Eintritt bis zur Streuscheibe 13 hin ausgeglichen. Eine stark vereinfachte Form der Intensitätssteuerung im Lampenhaus wäre eine durch einen Magneten einschwenkbare Lochblende, die nur zwei Helligkeitsstufen liefert.

Das unterhalb der Streuscheibe 13 liegende Kopierfenster 15a ist in einer Filmbuhne 15 angeordnet, in der der Film 14 durch Transportrollen 16 in Richtung des Pfeiles C vorwärts und rückwärts transportiert werden kann.

Unterhalb der Filmbühne 15 ist ein Schlitten 20 angeordnet, der mittels einer Zahnstange 20a, in die ein Ritzel 21 a eines Motors 21 eingreift, senkrecht zur optischen Achse des Kopiergerätes in Richtung des Pfeiles D hin- und hergeschoben werden kann. Der Schlitten 20 kann dabei wenigstens drei Stellungen einnehmen, die durch Deckung der rechten Seitenkante des Schlittens 20 mit einem der Pfeile E, F und G markiert sind.

Auf dem Schlitten selbst ist einmal eine sogenannte Scaneinrichtung 22, 23 angeordnet, die drei Abbildungszeilen aus sogenannten selfoc-lenses enthält. Diese Glasfasern mit einem Gradienten im Brechungsindex zur Mitte hin haben die Eigenschaft, daß sie aufgrund von Totalreflexion weitgehend verlustfrei Licht gebündelt fortleiten können. Die selfoc-lens-Zeilen 22a, 22b, 22c sind so angeordnet, daß sie drei gewisse, quer zum Pfeil C verlaufende Ausschnitte des Films 14 in der Stellung F in dem Kopierfenster 15a auf drei unterhalb dieser selfoc-lenses angeordnete Diodenzeilen 23a, 23b und 23c abbilden. Die Diodenzeilen sind jeweils mit einem Farbfilter in den Farben Rot, Blau und Grün versehen, deren spektrale Durchlässigkeiten zusammen mit der spektralen Empfindlichkeit der Dioden genau der spektralen Empfindlichkeit des Kopiermaterials entsprechen. In der Position F des Schlittens liegen die Abbildungseinrichtungen 22a, 22b, 22c mit den Dioden 23a, 23b, 23c unter dem Kopierfenster 15a, so daß bei eingeschalteter Kopierlichtquelle 1 ein durch Antrieb der Rollen 16 über das Kopierfenster hinweggezogener Film Streifen für Streifen bereichsweise von den Diodenzeilen 23a 23b, 23c in den drei Farben erfaßt wird. Der Versatz der drei Zeilen 23a, 23b, 23c in Richtung des Pfeiles C zueinander wirkt sich dann in einem zeitlichen Verzug der zusammengehörigen Signale aus. Dies wird beim Einspeichem dieser Signale berücksichtigt, so daß die drei Farbdichtewerte der einzelnen Vorlagenbereiche für die Auswertung in einem Speicher wieder zusammengeführt werden.

Unter anderem zur Auswertung der Dichtesignale der Meßzellenzeilen 23a, 23b, 23c ist eine zentrale Recheneinrichtung 29 vorgesehen. Gemäß der Lehre der Deutschen Patentschrift 42 05 922 führt sie die Meßwerte zu Bereichsdichtewerten zusammen. Nach der Lehre der Deutschen Patentschrift P 28 40 287 (AG 2136) werden daraus für jede einzelne Vorlage die erforderlichen Kopierlichtmengen in den drei Farben errechnet.

Neben der Scaneinrichtung für die bereichsweise Dichtemessung ist auf dem Schlitten 20 eine Schwarzweiß-Videokamera 24 angeordnet. Diese besteht aus einem Gehäuse 25, in dessen Öffnung an der Oberseite ein Objektiv 26 angebracht ist, welches das Kopierfenster 15a auf eine schwarzweiße, d. h. ungefilterte Flächen-CCD 27 abbildet. Die von der Flächen-CCD gelieferten Bildsignale werden durch eine entsprechende Leitung einem Bildspeicher 30 zugeführt. Die Videokamera 24 befindet sich gerade in der optischen Achse des Kopiergerätes, wenn die rechte Kante des Schlittens 20 mit dem Pfeil E in Deckung ist. An der Oberseite des Gehäuses 25 sind ferner lichtelektrische Wandler 28 angebracht, die im Streulichtbereich der Vorlage im Kopierfenster 15a liegen. Das von den Lichtempfängem 28 gelieferte Signale ist ein Maß für die Helligkeit an der Schwarzweiß-CCD 27. Über die zentrale Steuereinrichtung 29 kann für jede einzelne Kopiervorlage im Kopierfenster 15a für jede einzelne Farbe die Intensität über die Einsteuerung des Graukeils 10 so geregelt werden, daß die CCD gerade im linearen Bereich ausgesteuert wird. Anstelle der Signale einer zusätzlichen Meßeinrichtung 28 können allerdings auch bereits die vorher festgestellten Dichtewerte der Vorlagenbereiche dazu ausgewertet werden, mit welcher Intensität die jeweilige Vorlage in der betreffenden Farbe zu beleuchten ist.

Der Schlitten 20 hat noch eine weitere, gestrichelt gezeichnete Stellung ganz rechts, bei der die rechte Kante mit dem Pfeil G in Deckung ist. In dieser Stellung ist der Strahlengang vom Kopierfenster 15a zu dem Verschluß 17 frei, so daß nach dessen Öffnen ein Objektiv 19 die Vorlage auf ein nicht gezeigtes Kopiermaterial abbilden kann.

Die Wirkungsweise der beschriebenen Vorrichtung ist wie folgt:

Im Ausgangszustand ist der Verschluß 17 geschlossen, der Graukeil 10 und die Filter 4, 5, 6 völlig aus dem Strahlengang entfernt und die Lichtquelle 1 ist bereits zur bereichsweisen Dichtemessung eingeschaltet. Der Schlitten 20 wird durch die zentrale Steuervorrichtung in die Position F gebracht. Ein in die Transportrollen 16, z. B. von links her eingeführter Film 14 wird dann stetig durch das Kopierfenster transportiert und die zugehörigen bereichsweisen Dichtewerte in den drei Farben werden in die zentrale Recheneinrichtung 29 eingespeichert. Dort werden sie nach der Lehre der Deutschen Patentschrift P 28 40 287 für jede einzelne Vorlage ausgewertet für die Berechnung der Kopierlichtmengen in den drei Farben. Mit dem Einlauf der letzten Kopiervorlage des Films 14 in das Kopierfenster 15a ist dieser Dichtemeßvorgang beendet und der Kopierdurchlauf kann begonnen werden. Dazu wird die Drehrichtung der Rollen 16 umgeschaltet, bzw. einlaufseitige zusätzliche Rollen werden aktiviert, um eine Kopiervorlage nach der anderen in dem Kopierfenster 15a zu positionieren. Der Schlitten 20 wird durch den Motor 21 dazu in die Stellung G gebracht und der Kopiervorgang beginnt mit dem Öffnen des Verschlusses 17 mit weißem Licht.

Ist die Vorrichtung ausgelegt für das Verfahren Weißbelichtung mit subtraktiver Nachbelichtung, wird bis zum Ende der kürzesten Einzelfarbbelichtung ungefiltertes Licht auf die Vorlage im Kopierfenster 15a geworfen. Mit dem Ende z. B. der blauen Belichtung wird das gelbe Filter 6 durch den Magneten 9 angesteuert durch die Recheneinrichtung 29 in den Strahlengang gebracht und somit die blaue Belichtung beendet. Die Belichtung in den Farben Rot und Grün läuft noch weiter, bis durch entsprechende Ansteuerung der Magnete 7 bzw. 8 die entsprechenden Sperrfilter in den Strahlengang gebracht werden. Mit dem Ende der letzten Belichtung wird der Verschluß 17 geschlossen, der Vorlagentransport 16 aber noch nicht aktiviert. Durch die zentrale Steuereinrichtung wird nunmehr bei eingeschalteter Lichtquelle 1 die Videokamera 24 in den Strahlengang gebracht, d. h. der Schlitten 20 zu dem Pfeil E gefahren. Die Vorlage im Kopierfenster 15a wird nunmehr durch das Objektiv 26 auf die CCD 27 abgebildet. Um die Bildsignale für die einzelnen Farbauszüge von der CCD 27 zu erhalten, werden zunächst die beiden Kopierfilter 4 und 5 in den Farben. Cyan und Magenta in den Strahlengang gebracht. Diese Filterkombination ist nur noch für blaues Licht durchlässig, so daß nur der Blauauszug von der CCD 27 erfaßt wird. Gesteuert durch die zentrale Recheneinrichtung 29 werden deshalb die Bildsignale des Blauauszugs an den Bildspeicher 30 geliefert. Die Verweilzeit der Filter kann entsprechend der Auslesezeit der CCD 27 sehr kurz sein. Sodann werden die Filter 5 und 6 in den Farben Magenta und Gelb in den Strahlengang gebracht und der dadurch entstehende Rotauszug von der CCD 27 erfaßt und an den Bildspeicher 30 weitergegeben. Schließlich wird durch Einfahren der Filter 6 und 4 in den Farben Gelb und Cyan der Grünauszug erfaßt und dessen Bildsignale im Speicher 30 abgelegt.

Bei einem Kopierverfahren mit additiven Filtern in den Farben Rot, Grün und Blau ist die Sache noch einfacher; jeweils mit dem Einschub des entsprechenden Kopierfilters in diesen Farben liegt an der CCD 27 auch der entsprechende Farbauszug vor. Jeweils mit dem Filterwechsel kann bei Verwendung von Meßwerten aus dem Dichteabtastungsvorgang über den Motor 11 der Graukeil 10 in eine solche Stellung gebracht und die Beleuchtungsintensität für den CCD so gesteuert werden, daß diese in ihrem günstigsten Aussteuerungsbereich arbeitet. Die Intensitätssteuerung berücksichtigt dabei sowohl die allgemeine Durchlässigkeit der Kopiervorlage als auch deren Farbinhalt, so daß wirklich für jede Farbe eine optimale Aussteuerung erreichbar ist. Falls die Intensitätssteuerung über die im Streulichtbereich angeordneten Fotoempfänger 28 erfolgt, kann die Intensitätsoptimierung erst dann beginnen, wenn die Farbfilter bereits im Strahlengang sind.

Die Helligkeitssteuerung für die CCD kann aber auch aus Meßergebnissen eines getrennten Scanners oder von in der Aufnahmekamera auf den Film aufgezeichneten Signalen abgeleitet werden.

Die Reihenfolge der Erfassung der Farbauszüge muß nicht dem Beispiel entsprechen. Es kann z. B. Abtastzeit gespart werden, wenn Farbauszüge etwa gleicher Helligkeit nacheinander abgetastet werden, so daß zwischendurch keine Intensitätsveränderungen vorzunehmen sind. Dann kann aber das Ziel erreicht werden, die Bilderfassung während des Papiertransports durchzuführen, so daß die Kopierleistung durch die Bilderfassung nicht beeinträchtigt wird.

Nach Abschluß der Erfassung der Bildsignale dieser Vorlage wird durch Ansteuern des Antriebs 16 und des Motors 21 die nächste Vorlage in das Kopierfenster gebracht und der Schlitten 20 in die Stellung G. Der Kopiervorgang für diese nächste Vorlage kann dann durch Öffnen des Verschlusses 17 eingeleitet werden. Der Ablauf ist, wie vorher beschrieben, ebenso für das Erfassen und Ablegen der Bildsignale dieser nächsten Vorlage im Speicher 30.

Am Ende des Kopiervorgangs für diesen Film sind im Speicher 30 die Bildsignale aller Vorlagen dieses Films erfaßt, die dann in bekannter Weise mit den zugehörigen Negativnummern zu einem Gesamtbild zusammengefaßt und über eine entsprechende Druckvorrichtung ausgegeben werden.

Die Reihenfolge von Kopiervorgang und Bildsignalerfassung kann auch umgekehrt sein, d. h., daß erst die Bildsignale erfaßt und dann die Vorlagen optisch kopiert werden. Diese Reihenfolge eröffnet die Möglichkeit, mit den Bildsignalen den Bildinhalt auf einem Monitor, z. B. auf Kopierwürdigkeit oder Korrekturbedarf visuell zu beurteilen.

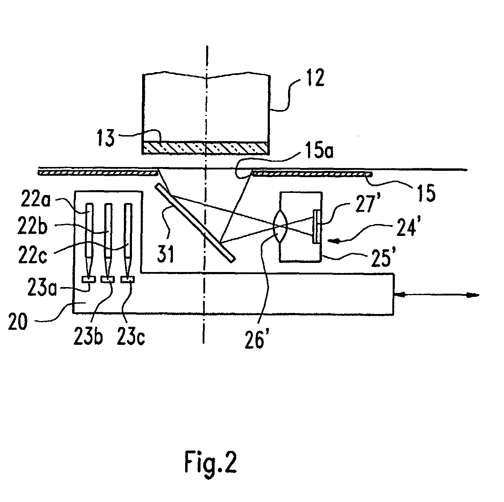

Es sind verschiedene Varianten möglich:
Zunächst kann gemäß Fig. 2., wo funktionell gleiche Teile mit Strich gekennzeichnet sind, im Strahlengang zur Videokamera 24' hin ein unter 45 % geneigter Vollspiegel 31 angeordnet sein, so daß mehr Freiheiten für die Abbildungswege bestehen. Um das durch einen Spiegel seitenverkehrte Bild richtig auszulesen, muß nur beim Auslesen des Speichers die Leserichtung umgekehrt werden. Dann kann zumindest bei der Kopierart mit nacheinander ablaufenden, additiven Belichtungen durch Einfahren jeweils eines Filters in den Farben Rot, Grün und Blau durch Anbringen eines teildurchlässigen Spiegels im Strahlengang, der das Bild der Vorlage im Kopierfenster 15a auf eine seitlich angebrachte CCD wirft, die Bildsignalerfassung zeitgleich mit dem Kopiervorgang erfolgen. Die Intensitätssteuerung zur Anpassung an die optimale Ausleuchtung der CCD muß dann allerdings im abgezweigten Strahlengang erfolgen. Der Schlitten 20 benötigt dann nur zwei Stellungen, nämlich eine für das Abtasten der Dichtewerte in den Vorlagenbereichen und eine zweite für den Kopiervorgang, in der auch die Bildsignale erfaßt werden.

Sodann kann anstelle oder zusätzlich zu der abschwächenden Intensitätsregelung im Lampenhaus ein in modernen Videokameras vorhandener sogenannter elektronischer Verschluß genutzt werden. Dieser regelt die Integrationszeiten in 256 annähernd logarithmischen Stufen. Er gewährleistet eine ausreichend feine Einstellung der Intensität im linearen Bereich der CCD, ohne die Nachteile einer Analogregelung wie verstärktes Rauschen, Störungen auf der Steuerleitung. Insbesondere hier ist eine optimale Anpassung für jeden Farbauszug an den Dynamikbereich möglich.

## Patentansprüche

1. Verfahren zum Erfassen von Bildsignalen mit hoher Auflösung im Kopierstrahlengang eines fotografischen Kopiergerätes für eine punktweise Farbbilderzeugung mittels eines mit dem Vorlagenbild beaufschlagten Bildsensors, **dadurch gekennzeichnet, daß** zur Erfassung der Bildsignale ein ausreichend hochauflösender SW-Bildsensor (27) verwendet wird und die drei Farbauszüge mittels der für die Kopierbelichtungssteuerung vorhandenen, jeweils nacheinander in Wirkstellung gebrachten Farbfilter (4, 5, 6) getrennt dem Bildsensor zugeführt werden.

2. Verfahren nach Anspruch 1, **dadurch gekennzeichnet, daß** beim Kopieren nach einem Farbsteuerverfahren mit drei nacheinander in den Kopierstrahlengang gebrachten additiven Farbfiltern in den Farben Rot, Grün und Blau diese Filter für die Bildsignalerfassung zusätzlich nacheinander in den Strahlengang des Kopiergerätes gebracht und die einzelnen Farbauszüge durch den Bildsensor (27) nacheinander erfaßt werden.

3. Verfahren nach Anspruch 1, **dadurch gekennzeichnet, daß** beim Kopieren nach einem Farbsteuerverfahren mit weißem Kopierlicht (1) und subtraktiven Nachbelichtungen und somit teilweise zeitgleich ablaufenden Farbbelichtungen von den als Farbverschlüsse wirkenden subtraktiven Farbfiltem in den Farben Cyan (4), Magenta (5) und Gelb (6) zur Bildsignalerfassung nacheinander jeweils zwei der drei subtraktiven Filter gleichzeitig in den Beleuchtungsstrahlengang der Vorlage (14) gebracht werden.

4. Verfahren nach einem der vorangehenden Ansprüche, **dadurch gekennzeichnet, daß** als Bildsensor eine schwarzweiß-empfindliche Flächen-CCD (27) verwendet wird.

5. Vorrichtung zur Durchführung des Verfahrens nach Anspruch 1 mit einer fotografischen Kopiereinrichtung, enthaltend eine im wesentlichen weiße Lichtquelle (1), in eine den Beleuchtungsstrahlengang vollständig überdeckende Stellung einfahrbare Farbfilter (4, 5, 6), die je nach Filtercharakteristik eine oder zwei Belichtungsfarben ausschließen, eine Steuereinrichtung (29), die die geforderten Kopierlichtmengen durch entsprechende Filterbewegungen bestimmt, ein Objektiv (19), das die so ausgeleuchtete Vorlage (14), auf ein Kopiermaterial abbildet, sowie ein Bildsensor (27) auf dem durch die Farbfilter (4, 5, 6) hindurch ausgeleuchtete Vorlage (14) abbildbar ist, **dadurch gekennzeichnet, daß** der Bilsensor ein SW-Bildsensor ist, der aus einer ungefilterte Flächen-CCD besteht.

6. Vorrichtung nach Anspruch 5, **dadurch gekennzeichnet, daß** die Flächen-CCD (27) zusammen mit einem Abbildungsobjektiv (26) in den Kopierstrahlengang zwischen Vorlage (14) und dem Objektiv (19) für die Kopierbelichtung für die Bildsignalerfassung direkt oder über einen Umtenkspiegel (31) für deren Dauer einbringbar ist.

7. Vorrichtung nach einem der Ansprüche 5 oder 6, **dadurch gekennzeichnet, daß** Abbildungsobjektiv (26) und Flächen-CCD (27) sowie gegebenenfalls der Umlenkspiegel (31) auf einem motorgetriebenen Schlitten (20) angeordnet sind, auf dem der Scanner (21, 22, 23) für die bereichsweise Dichtemessung zur Kopierbelichtungssteuerung sitzt und daß der Schlitten (20) in wenigstens drei Stellungen verfahrbar ist, eine Stellung E für die Bildsignalerfassung eine Stellung F für die bereichsweise Dichtemessung und eine Stellung G für den Kopiervorgang.

8. Vorrichtung nach einem der vorangegangenen Ansprüche 5 bis 7, **dadurch gekennzeichnet, daß** die Signalgröße der Videokamera (24) über Intensitätsregler (28; 10, 11) und/oder eine Steuerung der Integrationszeit für jeden Farbauszug einzeln steuerbar ist.

9. Vorrichtung nach Anspruch 8, **dadurch gekennzeichnet, daß** zur Steuerung der Integrationszeit eine logarithmische Shutteranordnung vorgesehen ist.

10. Vorrichtung nach einem der Ansprüche 5 bis 9, **dadurch gekennzeichnet, daß** eine zentrale Steuereinrichtung (29) vorgesehen ist
- zur Abfrage der Bereichsdichtewerte in der Stellung F des Schlittens (20) und deren Auswertung zur Berechnung der Kopierlichtmengen für jede der Vorlagen (14) in den drei Farben
- zur entsprechenden Ansteuerung der Filtersteuermagnete (7, 8, 9) und des Verschlußmagneten (18) in der Stellung G des Schlitten sowie
- in der Stellung E des Schlittens zur einzelnen oder paarweisen Einschaltung der Filter (4, 5, 6) in den Bildsignalerfassungsstrahlengang und Einstellung der Signalgröße am Sensor (27) für jede Farbe über den Intensitätsregler (28; 10, 11) oder die Regelung der Integrationszeit und zur Abfrage der Bildsignale.

11. Vorrichtung zur Durchführung des Verfahrens nach Anspruch 2, **dadurch gekennzeichnet, daß** im Kopierstrahlengang ein teildurchlässiger Spiegel angeordnet ist, der die drei Farbauszugsbilder nacheinander während der Kopierbelichtungen dem Bildsensor zuführt.

## Claims

1. Method for acquiring image signals with high resolution in the copying beam path of photographic copying machine for point-wise colour image generation by means of an image sensor to which the subject image is applied, **characterised in that** a sufficiently high-resolution B/W image sensor (27) is used for acquiring the image signals, and the three colour components are sent separately to the image sensor by means of the colour filters (4, 5, 6) present for the copying illumination control, which are each brought successively into the active position.

2. Method according to Claim 1, **characterised in that** for copying according to a colour control method with three additive colour filters, in the colours red, green and blue, which are brought successively into the copying beam path, the filters are additionally brought successively into the beam path of the copying machine for the image signal acquisition and the individual colour components are acquired successively by the image sensor (27).

3. Method according to Claim 1, **characterised in that** for copying according to a colour control method with white copying light (1) and subtractive subsequent illuminations, and therefore in some cases simultaneously occurring colour illuminations of the subtractive colour filters, in the colours cyan (4), magenta (5) and yellow (6), acting as colour shutters, two of the three subtractive filters in each case are successively brought simultaneously into the lighting beam path of the subject (14) for the image signal acquisition.

4. Method according to one of the preceding claims, **characterised in that** a two-dimensional CCD (27) sensitive to black and white is used as the image sensor.

5. Device for carrying out the method according to Claim 1 with a photographic copying instrument, containing an essentially white light source (1), colour filters (4, 5, 6) which can be inserted into a position fully covering the lighting beam path and which exclude one or two illumination colours, depending on the filter characteristic, a control instrument (29) which determines the required copying light quantities by corresponding filter movements, and an objective (9) which images the thus exposed subject (14) onto a copying material, as well as an image sensor on which the subject (14) exposed through the colour filters (4, 5, 6) can be imaged, **characterised in that** the image sensor is a B/W image sensor which consists of an unfiltered two-dimensional CCD.

6. Device according to Claim 5, **characterised in that** for the image signal acquisition, the two-dimensional CCD (27) together with an imaging objective (26) can be brought, directly or via a deviating mirror (31) for the duration thereof, into the copying beam path between the subject (14) and the objective (19) for the copying illumination.

7. Device according to one of Claims 5 and 6, **characterised in that** the imaging objective (26) and the two-dimensional CCD (27), as well as optionally the deviating mirror (31), are arranged on a motorised carriage (20), on which the scanner (21, 22, 23) for the local density measurement for the copying illumination control is situated, and **in that** the carriage (20) can be driven into at least three positions, a position E for the image signal acquisition, a position F for the local density measurement and position G for the copying process.

8. Device according to one of the preceding Claims 5 to 7, **characterised in that** the signal level of the video camera (24) can be controlled individually for each colour component via intensity regulators (28; 10, 11) and/or an integration time control.

9. Device according to Claim 8, **characterised in that** a logarithmic shutter arrangement is provided as the integration time control.

10. Device according to one of Claims 5 to 9, **characterised in that** a central control instrument (29) is provided
- for scanning the local density values in the position F of the carriage (20) and for evaluation thereof to calculate the copying light quantities for each of the subjects (14) in the three colours
- for correspondingly driving the filter control magnets (7, 8, 9) and the shutter magnet (18) in the position G of the carriage, as well as
- in the position E of the carriage, for switching on individually or pair-wise the filters (4, 5, 6) in the image signal acquisition beam path and for adjusting the signal level at the sensor (27) for each colour via the intensity regulators (28; 10, 11) or the integration time regulation and for scanning the image signals.

11. Device for carrying out the method according to Claim 2, **characterised in that** a semi-transparent mirror, which sends the three colour component images successively to the image sensor during the copying illuminations, is arranged in the copying beam path.

## Revendications

1. Procédé de saisie de signaux d'image à haute résolution dans le faisceau de reproduction d'un appareil de reproduction photographique pour une génération par points d'images de couleur à l'aide d'un capteur d'images sur lequel est appliquée l'image originale, **caractérisé en ce que** pour la saisie des signaux d'image on utilise un capteur d'images NB à haute résolution (27), et les trois extraits de couleurs sont fournis au capteur d'images séparément à l'aide des filtres chromatiques (4, 5, 6) servant à commander l'exposition de reproduction et mis successivement en position active.

2. Procédé selon la revendication 1, **caractérisé en ce que** lors d'une reproduction selon un procédé de commande de couleurs avec trois filtres chromatiques additifs dans les couleurs rouge, verte et bleue introduits successivement dans le faisceau de reproduction, ces filtres sont introduits, pour la saisie des signaux d'image, également successivement dans le faisceau de l'appareil de reproduction et les différents extraits de couleurs sont saisis successivement par le capteur d'images (27).

3. Procédé selon la revendication 1, **caractérisé en ce que** lors d'une reproduction selon un procédé de commande de couleurs avec lumière de reproduction blanche (1) et post-expositions soustractives et donc expositions de couleurs se déroulant partiellement simultanément provenant de filtres chromatiques soustractifs agissant comme des obturateurs chromatiques dans les couleurs cyan (4), magenta (5) et jaune (6), pour la saisie de signaux d'image, successivement deux des trois filtres soustractifs sont introduits simultanément dans le faisceau d'éclairage de l'original (14).

4. Procédé selon l'une quelconque des revendications précédentes, **caractérisé en ce qu'**en tant que capteur d'images on utilise un CCD surfacique sensible au noir et blanc (27).

5. Dispositif pour la mise en oeuvre du procédé selon la revendication 1 avec un ensemble de reproduction photographique, comprenant une source de lumière (1) pour l'essentiel blanche, des filtres chromatiques (4, 5, 6) pouvant être placés dans une position recouvrant complètement le faisceau d'éclairage, qui en fonction des caractéristiques du filtre excluent une ou deux couleurs d'exposition, un ensemble de commande (29), qui détermine les débits de lumière de reproduction à l'aide de mouvements de filtre appropriés, un objectif (19), qui reproduit l'original (14) ainsi éclairé sur un support de reproduction, ainsi qu'un capteur d'images, permettant de reproduire l'original (14) éclairé à travers les filtres chromatiques (4, 5, 6), **caractérisé en ce que** le capteur d'images est un capteur d'images NB qui est constitué d'un CCD surfacique non filtré.

6. Dispositif selon la revendication 5, **caractérisé en ce que** le CCD surfacique (27) associé à un objectif de reproduction (26) peut être introduit dans le faisceau de reproduction, entre l'original (14) et l'objectif (19) pour l'exposition de reproduction pour la saisie de signaux d'image pendant leur durée directement ou par l'intermédiaire d'un miroir de renvoi (31).

7. Dispositif selon l'une quelconque des revendications 5 ou 6, **caractérisé en ce que** l'objectif de reproduction (26) et le CCD surfacique (27) ainsi qu'éventuellement le miroir de renvoi (31) sont disposés sur un chariot (20) motorisé, sur lequel est placé le scanneur (21, 22, 23) pour la mesure de densité par zones pour la commande d'exposition de reproduction, et **en ce que** le chariot (20) peut être déplacé dans au moins trois positions, une position E pour la saisie de signaux d'image, une position F pour la mesure de densité par zones et une position G pour le processus de reproduction.

8. Dispositif selon l'une des revendications précédentes 5 à 7, **caractérisé en ce que** la grandeur de signal de la caméra vidéo (24) peut être réglée individuellement pour chaque extrait de couleur à l'aide de régulateurs d'intensité (28 ; ; 10, 11) et/ou d'une commande du temps d'intégration.

9. Dispositif selon la revendication 8, **caractérisé en ce que** pour la commande du temps d'intégration un agencement obturateur logarithmique est prévu.

10. Dispositif selon l'une des revendications 5 à 9, **caractérisé en ce qu'**un ensemble de commande centralisé (29) est prévu
- pour la consultation des valeurs de densité de zone dans la position F du chariot (20) et leur interprétation pour le calcul des débits de lumière de reproduction pour chacun des originaux (14) dans les trois couleurs,
- pour la gestion appropriée des aimants de commande de filtre (7, 8, 9) et de l'aimant d'obturation (18) dans la position G du chariot, et
- dans la position E du chariot, pour la mise en service individuelle ou par paires des filtres (4, 5, 6) dans le faisceau de saisie de signaux d'image et pour le réglage de la grandeur de signal sur le capteur (27) pour chaque couleur à l'aide du régulateur d'intensité (28 ; 10, 11), ou pour le réglage du temps d'intégration et la consultation des signaux d'image.

11. Dispositif pour la mise en oeuvre du procédé selon la revendication 2, **caractérisé en ce qu'**un miroir partiellement perméable à la lumière est disposé dans le faisceau de reproduction, qui fournît au capteur d'images successivement les trois images d'extraits de couleurs pendant les expositions de reproduction.
